# EUROPÄISCHE PATENTANMELDUNG

(11) **EP 1 130 441 A2**
(43) Veröffentlichungstag der Anmeldung: **05.09.2001**
(21) Anmeldenummer: 00127319.2
(22) Anmeldetag: 13.12.2000
(51) Int. Cl.: G02B 25/00

(54) **Okular**

(30) Priorität: 04.03.2000 DE 20004114 U
(71) Anmelder: Büttgenbach, Johannes, 51429 Bergisch Gladbach (DE)
(72) Erfinder: Büttgenbach, Johannes, 51429 Bergisch Gladbach (DE)
(74) Vertreter: von Kirschbaum, Alexander, Dipl.-Ing.

(57) **Zusammenfassung**

Ein Okular weist zwei Vergrößerungsmittel (10,12) mit jeweils mindestens zwei Linsen (22,24) auf. Die Vergrößerungsmittel (10,12) sind jeweils vor dem menschlichen Auge angeordnet. Die Vergrößerungsmittel (10,12) sind über Befestigungsmittel (40) mit einem Aufnahmeteil (14) eines Gestells verbunden. Das Gestell weist ferner Halteteile (16) zur Halterung des Okulars am menschlichen Kopf auf. Die Vergrößerungsmittel (10,12) sind an dem Aufnahmeteil (14) durch die Befestigungsmittel (40) steckbar befestigt.

## Beschreibung

Die Erfindung betrifft ein Okular, wie beispielsweise ein Fernglas oder ein Opernglas.

Bekannte Ferngläser und Operngläser müssen vom Benutzer mit der Hand vor den Augen gehalten werden. Wenn hierbei der Arm nicht aufgestützt werden kann, ist es nicht möglich, das Vergrößerungsglas ruhig zu halten. Dies führt dazu, dass das vom Benutzer gesehene Bild verwackelt wirkt. Insbesondere über längere Zeiträume führt das Halten von derartigen Vergrößerungsgläsern zur Ermüdung und damit zu stärkerem Wackeln.

Aufgabe der Erfindung ist es, ein einfach handhabbares Okular zu schaffen, bei dem ein Ermüden vermieden ist.

Die Lösung der Aufgabe erfolgt durch die Merkmale des Anspruchs 1.

Das erfindungsgemäße Okular weist eine Vergrößerungseinrichtung auf, die mit einem Gestell verbunden ist. Die Vergrößerungseinrichtung weist mindestens zwei Linsen je Strahlengang auf. Somit sind vor jedem menschlichen Augen mindestens zwei Linsen angeordnet, durch die eine Vergrößerung des betrachteten Bildes erzielt wird. Das Gestell weist ein Halteteil und ein Aufnahmeteil auf. Das Halteteil dient zur Halterung des Okulars am menschlichen Kopf und das Aufnahmeteil zur Aufnahme der Vergrößerungseinrichtung.

Da das erfindungsgemäße Okular mittels des Halteteils direkt am menschlichen Kopf befestigbar ist, muß das Okular nicht mehr vom Benutzer gehalten werden. Eine Ermüdung der Arme durch Halten des Okulars tritt somit nicht auf. Der Eindruck des Verwackelns beruht bei bekannten Okularen darauf, dass eine Relativbewegung zwischen dem menschlichen Auge und dem Okular stattfindet. Da das erfindungsgemäße Okular mittels des Halteteils an dem menschlichen Kopf befestigt ist, tritt keine Relativbewegung zwischen der Vergrößerungseinrichtung und dem menschlichen Auge auf, so dass der Benutzer nicht den Eindruck eines verwackelten Bildes hat.

Ferner hat das erfindungsgemäße Okular den Vorteil, dass der Benutzer seinen Kopf beliebig bewegen kann und dabei automatisch das Okular mitbewegt wird. Ein weiterer Vorteil besteht darin, dass die Hände des Benutzers frei sind.

Bei dem Gestell des erfindungsgemäßen Okulars kann es sich um eine Art Brillengestell handeln, wobei die Halteteile sodann die Brillenbügel sind. Bei einer derartigen Ausführung kann das Okular wie eine Brille einfach auf- und abgesetzt werden. An dem Querbügel der Brille, der dem Aufnahmeteil entspricht, können Nasenauflagen vorgesehen sein.

Vorzugsweise ist die Vergrößerungseinrichtung durch ein steckbares Befestigungsmittel am Aufnahmeteil befestigbar. Hierbei kann das Befestigungsmittel an der Vergrößerungseinrichtung oder an dem Aufnahmeteil vorgesehen sein. Somit kann die Vergrößerungseinrichtung durch einfaches Aufstecken an dem Aufnahmeteil befestigt werden und zum Transport des Okulars einfach von dem Aufnahmeteil abgesteckt werden.

Die Befestigungsmittel sind vorzugsweise als lösbare Rastmittel ausgebildet. Hierdurch ist ein ungewolltes Lösen der Vergrößerungseinrichtung von dem Aufnahmeteil verhindert, so dass auch bei stärkeren Bewegungen des Kopfes die Vergrößerungseinrichtung starr mit dem Aufnahmeteil verbunden bleibt.

Um das Aufstecken und Abnehmen der Vergrößerungseinrichtung auf dem Aufnahmeteil zu erleichtern, weist das Befestigungsmittel vorzugsweise mindestens einen elastischen Befestigungsarm mit Rastnase auf. Beim Aufstecken oder Abnehmen der Vergrößerungseinrichtung wird der elastische Befestigungsarm somit aus seiner Ausgangsstellung gebogen und schnappt, sobald die Vergrößerungseinrichtung vollständig aufgesteckt oder vollständig von dem Aufnahmeteil abgenommen ist, in die Ausgangsstellung zurück. Um ein sicheres Halten der Vergrößerungseinrichtung an dem Aufnahmeteil zu gewährleisten, kann die Rastnase beispielsweise in an dem Aufnahmeteil vorgesehene Ausnehmungen einrasten. Vorzugsweise ist das Aufnahmeteil so ausgebildet, dass der Befestigungsarm das Aufnahmeteil mindestens teilweise umgreift. Besondere Ausnehmungen an dem Aufnahmeteil zum Einrasten der Rastnasen sind hierbei nicht erforderlich.

Vorzugsweise weist das Befestigungsmittel zwei Rastarme auf, die beide elastisch ausgebildet sind und jeweils eine Rastnase aufweisen. Hierdurch ist das Verbinden bzw. Lösen der Vergrößerungseinrichtung mit dem Aufnahmeteil erleichtert.

Bei einer besonders bevorzugten Ausführungsform weist die Vergrößerungseinrichtung zwei Vergrößerungsmittel auf, wobei jeweils ein Vergrößerungsmittel vor einem Auge angeordnet ist. Hierbei handelt es sich vorzugsweise um zwei voneinander völlig unabhängig handhabbare Vergrößerungsmittel. Diese Vergrößerungsmittel können identisch ausgebildet sein und sind jeweils einzeln auf das Aufnahmeteil aufsteckbar. Die beiden Vergrößerungsmittel können somit unabhängig voneinander direkt vor dem jeweiligen Auge auf das Aufnahmeteil aufgesteckt werden. Das erfindungsgemäße Okular ist somit einfach auf die unterschiedlichen Benutzer mit unterschiedlichem Augenabstand anpaßbar.

Jedes Vergrößerungsmittel weist zwei im Strahlengang des menschlichen Auges angeordnete Linsen auf. Zur Einstellung der Schärfe sind die Linsen gegeneinander verschiebbar. Dies kann mit einer Zahnstange und einem Verstellrad erfolgen. Es ist ebenfalls möglich, eine elektrische Scharfstellung vorzusehen, so dass das Einstellen des Abstandes der beiden Linsen zueinander, beispielsweise durch ein von einem Elektromotor angetriebenen Spindel-Mutter-System erfolgt. Das Vorsehen einer elektrischen Scharfstellung hat den Vorteil, dass eine automatische Scharfstellung in Form eines Autofokus-Systems vorgesehen werden kann. Da bei Benutzern des erfindungsgemäßen Okulars mit einer Sehschwäche diese üblicherweise ebenfalls mittels der Linsen des Okulars ausgeglichen wird, muss vor Einsatz des Autofokus-Systems der Abstand der beiden Linsen einmal zum Ausgleich der Sehschwäche eingestellt werden. Anschließend kann eine kontinuierliche Scharfstellung durch ein Autofokus-System erfolgen.

Bei einer weiteren bevorzugten Ausführungsform sind die Vergrößerungsmittel nicht steckbar, sondern gelenkig mit dem Aufnahmeteil verbunden. Es ist hierbei zum Transport des Okulars möglich, die Vergrößerungsmittel entsprechend zu verschwenken, so dass das Okular eine geringe Transportgröße hat.

Zur stabilen Halterung der Vergrößerungsmittel an dem Gestell bzw. an dem Aufnahmeteil des Gestells kann zusätzlich ein Versteifungssteg vorgesehen sein, der von dem Vergrößerungsmittel zum Gestell verläuft und somit eine seitliche Stabilisierung des Vergrößerungsmittels darstellt. Der Versteifungssteg ist an seinen Enden entweder lösbar mit dem Gestell oder lösbar mit dem Vergrößerungsmittel verbunden, so dass nach dem Lösen des Versteifungsstegs je nach Ausführungsform das Vergrößerungsmittel entweder abgesteckt oder verschwenkt werden kann.

Vorzugsweise sind die Befestigungsmittel für die Vergrößerungseinrichtungen zum Aufstecken der Befestigungsmittel an dem Aufnahmeteil derart ausgebildet, dass ein Aufstecken der Vergrößerungseinrichtungen auf eine herkömmliche Brille möglich ist. Hierbei wäre sodann das näher am Auge angeordnete Vergrößerungsmittel bzw. diese Linse zwischen dem Auge und der Linse der herkömmlichen Brille angeordnet. Ebenso ist es möglich, die Befestigungsmittel der Vergrößerungseinrichtungen derart auszubilden, dass die beiden Vergrößerungsmittel vor der Linse der herkömmlichen Brille angeordnet sind. Das Anordnen der herkömmlichen Linse der Brille zwischen den beiden Vergrößerungsmitteln hat den Vorteil, dass das Gestell der Brille weiterhin sicher am menschlichen Kopf hält und nicht aufgrund des zusätzlichen Gewichts kippt.

Eine weitere bevorzugte Ausführungsform, durch die der der Erfindung zugrunde liegende Gedanke, ein einfach handhabbares Okular zu schaffen gelöst ist, besteht in einem auf eine herkömmliche Brille aufsteckbaren zweiten Linsenpaar. Diese Ausführungsform des erfindungsgemäßen Okulars weist somit mindestens zwei Linsen je Strahlengang auf. Es handelt sich hierbei um jeweils mindestens zwei Linsen, die vor einem Auge angeordnet sind. Ferner weist das Okular ein Gestell mit einem Halteteil zur Halterung des Okulars am menschlichen Kopf auf. Hierbei kann es sich um ein herkömmliches Brillengestell handeln. Mit dem Halteteil des Gestells ist ein erstes Linsenpaar verbunden, das jeweils eine Linse je Strahlengang aufweist, so dass vor jedem Auge eine Linse des Linsenpaars entsprechend einer herkömmlichen Brille angeordnet ist. Vor dem ersten Linsenpaar ist ein zweites Linsenpaar mit ebenfalls einer Linse je Strahlengang angeordnet.

Erfindungsgemäß ist das zweite Linsenpaar über Befestigungselemente mit dem Halteteil des Gestells lösbar verbunden. Die Befestigungselemente sind hierbei außerhalb der Linsen des zweiten sowie des ersten Linsenpaars angeordnet. Da somit mindestens zwei Befestigungselemente vorgesehen sind und diese außerhalb der Linsenpaare angeordnet sind, sind die Befestigungselemente in einem möglichst großen Abstand zueinander angeordnet. Hierdurch ist eine gute Stabilität der Verbindung des zweiten Linsenpaars mit dem Halteteil des Gestells gewährleistet.

Zusätzlich kann zwischen den beiden Linsen der beiden Linsenpaare ein weiteres Befestigungselement vorgesehen sein. Dieses Befestigungselement verbindet sodann die beiden jeweils zwischen den Linsen eines Linsenpaars angeordneten Stege.

Vorzugsweise sind die Befestigungselemente derart ausgebildet, dass der Abstand zwischen den beiden Linsenpaaren einstellbar ist. Eine derartige, möglichst einfach handhabbare Einstellungsmöglichkeit des Abstandes zwischen den beiden Linsenpaaren ermöglicht ein einfaches Scharfstellen des vergrößerten Bildes. Vorzugsweise sind die Befestigungselemente hierzu jeweils an Seitenbügeln des Gestells verschiebbar befestigt. Hierzu können die Befestigungselemente derart ausgebildet sein, dass sie die Seitenbügel des Gestells zumindest teilweise umgreifen. Durch eine entsprechende Elastizität der die Seitenbügel umgreifenden Teile der Befestigungselemente kann eine ausreichende Reibung hervorgerufen werden, so dass das zweite Linsenpaar gegenüber dem ersten Linsenpaar einerseits leicht von Hand verschiebbar ist und andererseits auch beim Abnehmen des Okulars in der eingestellten Stellung bleibt. Ein Verstellen des Abstandes zwischen den beiden Linsenpaaren durch Verrutschen kann auch durch eine zusätzliche Fixiereinrichtung wie beispielsweise eine Schraube oder ein Rastmittel realisiert werden.

Bei einer besonders bevorzugten Ausführungsform des erfindungsgemäßen Okulars weist das Gestell eine Antriebseinheit und eine Fokussiereinheit auf. Mit Hilfe der Antriebseinheit ist es möglich, den Abstand der beiden Linsenpaare automatisch zu verstellen. Durch die zusätzlich vorgesehene Fokussiereinheit erfolgt dieses Verstellen derart automatisch, dass vom Betrachter stets ein scharfes, d.h. automatisch fokussiertes Bild gesehen wird.

Entsprechend der vorstehend beschriebenen bevorzugten Möglichkeiten der Verbindung der Vergrößerungseinrichtung mit dem Aufnahmeteil können bei dieser Ausführungsform die Befestigungselemente entsprechend, beispielsweise mit Rastnasen und ähnlichem ausgebildet sein.

Nachfolgend wird die Erfindung anhand bevorzugter Ausführungsformen unter Bezugnahme auf die anliegenden Zeichnungen näher erläutert.

### Es zeigen:

- Fig. 1: eine schematische perspektivische Ansicht einer ersten Ausführungsform des Okulars,
- Fig. 2: eine Schnittansicht entlang der Linie II-II in Fig. 1,
- Fig. 3: eine Schnittansicht entlang der Linie III-III in Fig. 2,
- Fig. 4: eine schematische Ansicht einer Ausführungsform eines Befestigungsmittels eines Vergrößerungsmittels
- Fig. 5: eine schematische Draufsicht einer zweiten Ausführungsform des Okulars, und
- Fig. 6: eine schematische perspektivische Ansicht einer dritten Ausführungsform des Okulars.

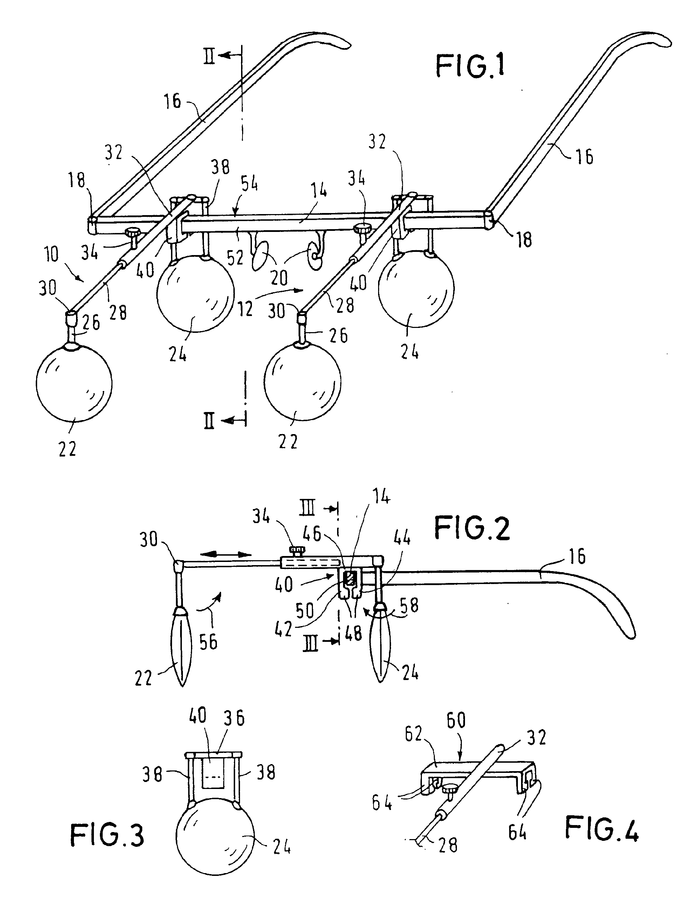

Die in den Fign. 1-3 dargestellte Ausführungsform weist zwei Vergrößerungsmittel 10,12 auf, die an einem Aufnahmeteil 14 eines Gestells befestigt sind. Das Gestell weist ferner zwei als Brillenbügel ausgebildete Halteteile 16 auf. Die Halteteile 16 sind mit dem Aufnahmeteil 14 über Gelenke 18 verbunden. Das Aufnahmeteil 14 ist im wesentlichen gerade und weist einen rechteckigen Querschnitt auf. Ferner sind an dem Aufnahmeteil 14 Nasenauflagen 20 zur Auflage des Gestells auf der menschlichen Nase vorgesehen.

Die beiden Vergrößerungsmittel 10,12 sind identisch aufgebaut. Jedes Vergrößerungsmittel 10,12 weist zwei Linsen 22,24 auf. Die Linse 22 ist jeweils mittels eines Abstandshalters 26 mit einem Steg 28 verbunden. Die Länge des Abstandshalters 26 ist so gewählt, dass die Linse 22 auf Höhe des menschlichen Auges angeordnet ist. Für den später beschriebenen Transport ist der Abstandshalter 26 mit dem Steg 28 über ein Gelenk 30 verbunden. Der Steg 28 ist im Querschnitt rund ausgebildet und in einem Halterohr 32 geführt, wobei der Innendurchmesser des Halterohrs 32 dem Außendurchmesser des Stegs 28 entspricht. Der Querschnitt des Stegs 28 sowie des Halterohrs 32 kann auch rechteckig sein oder jede andere beliebige Form aufweisen. Zur Einstellung des Abstandes der beiden Linsen 22,24 ist der Steg 28 in dem Halterohr 32 verschiebbar gehalten. Zur Fixierung des Abstandes ist eine Klemmschraube 34 vorgesehen.

An dem dem menschlichen Auge zugewandten Ende des Halterohrs 32 ist die Linse 24 befestigt. Hierzu ist ein Quersteg 36 gelenkig mit dem Halterohr 32 verbunden, so dass der Quersteg 36 um seine Längsachse schwenkbar ist. An den äußeren Enden des Querstegs 36 ist jeweils ein Abstandshalter 38 vorgesehen, der mit der Linse 24 verbunden ist (Fig. 3).

Zur Befestigung der Vergrößerungsmittel 10,12 weist jedes Vergrößerungsmittel ein Befestigungsmittel 40 auf. Das Befestigungsmittel 40 weist zwei elastische Befestigungsarme 42,44 auf, die über ein Querstück 46 miteinander verbunden sind. Das Querstück 46 ist mit dem Halterohr 32 fest verbunden. An dem dem Querstück 46 abgewandten Ende der Befestigungsarme 42,44 ist jeweils eine Rastnase 48 vorgesehen. Die beiden Rastnasen 48 weisen aufeinander zu.

Beim Aufstecken der Vergrößerungsmittel 10,12 auf das Aufnahmeteil 14 werden die beiden Befestigungsarme 42,44 auseinandergedrückt. Sobald die Vergrößerungsmittel 10,12 vollständig auf das Aufnahmeteil 14 aufgesteckt sind, schnappen die elastischen Befestigungsarme 42,44 in ihre Ausgangsstellung zurück, so dass die Rastnasen 18 das Aufnahmeteil 14 jeweils teilweise umgreifen. Um das Aus- und Abstecken der Vergrößerungsmittel 10,12 zu erleichtern, kann das Aufnahmeteil eine Verjüngung aufweisen.

Um den horizontalen Abstand der beiden Vergrößerungsmittel 10,12 einstellen zu können, weisen die Befestigungsmittel 40 an der Innenseite der Befestigungsarme 42,44 Gleitflächen 50 auf. Die Gleitflächen 50 liegen an der Vorderseite 52 bzw. der Rückseite 54 des Aufnahmeteils 14 an.

Zum Transport des Okulars werden die beiden Vergrößerungsmittel 10,12 von dem Aufnahmeteil 14. abgezogen, indem sie in Fig. 2 nach oben bewegt werden. Hierbei werden die Befestigungsarme 42,44 auseinandergedrückt. Anschließend wir die Linse 22 in Richtung des Pfeils 56 (Fig. 2) nach rechts geklappt. Entsprechend wird die Linse 24 um den gelenkig gelagerten Quersteg 36 in Richtung des Pfeils 58 in Fig. 2 nach links geklappt. Um ein Klappen der Linse 24 zu ermöglichen, ist die Linse 24 über zwei Abstandshalter 38 und den Quersteg 36 mit dem Halterohr 32 verbunden, so dass beim Klappen der Linse 24 das Befestigungsmittel 40 zwischen den beiden Abstandshaltern 38 angeordnet ist (Fig. 3).

Die beiden zusammengeklappten Vergrößerungsmittel 10,12 weisen eine sehr geringe Größe auf und können beispielsweise in ein Etui gesteckt werden. Das Gestell wird entsprechend eines Brillengestells mittels der Gelenke 18 zusammengeklappt, wobei die beiden Halteteile 16 nach innen geklappt werden.

Zur Erhöhung der Stabilität der Befestigung der Vergrößerungsmittel 10,12 an dem Aufnahmeteil 14 kann das in Fig. 4 dargestellte Befestigungsmittel 60 vorgesehen sein. Das Befestigungsmittel 60 ist entsprechend dem Befestigungsmittel 40 mit dem Halterohr 32 verbunden. Das Befestigungsmittel 60 weist ein Querteil 62 auf, das senkrecht zu dem Halterohr 32 verläuft. An den beiden Enden des Querteils 62 sind jeweils zwei Befestigungsarme 64 vorgesehen, die nach unten in Richtung des Aufnahmeteils 14 ragen. Die Befestigungsarme 64 sind entsprechend den Befestigungsarmen 42,44 ausgebildet und weisen ebenfalls Rastnasen auf.

Durch das Vorsehen des Befestigungsteils 60 sind die Vergrößerungsmittel 10,12 steifer mit dem Aufnahmeteil 14 verbunden. Insbesondere ist ein Wackeln der Vergrößerungsmittel 10,12 in horizontaler Ebene durch das Befestigungsmittel 60 vermieden. Im übrigen werden Vergrößerungsmittel, die mit dem Befestigungsmittel 60 versehen sind, auf dieselbe Weise, wie vorstehend beschrieben, mit dem Aufnahmeteil 14 verbunden.

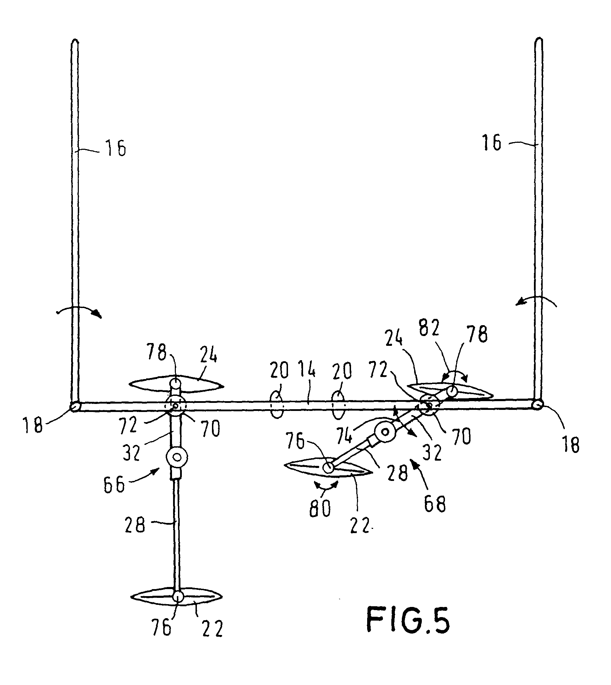

Bei der in Fig. 5 dargestellten Ausführungsform sind die der vorstehenden Ausführungsformen entsprechenden Elemente mit den gleichen Bezugszeichen bezeichnet. Der wesentliche Unterschied besteht in der Befestigung von Vergrößerungsmitteln 66,68. Die Vergrößerungsmittel 66,68 sind wiederum identisch aufgebaut, jedoch nicht mit dem Aufnahmeteil 14 steckbar verbunden. Vielmehr ist das Halterohr 32 durch einen Befestigungssteg 70 fest mit dem Aufnahmeteil 14 verbunden. Der Befestigungssteg 70 ist so ausgebildet, dass die Vergrößerungsmittel 66,68 um eine senkrecht zum Aufnahmeteil 14 verlaufende Achse 72 in Richtung des Pfeils 74 verschwenkbar sind.

Die Linsen 22,24 sind ebenfalls schwenkbar mit dem Steg 28 bzw. dem Halterohr 32 verbunden. Die Schwenkachsen 76,78 verlaufen parallel zu den Schwenkachsen 72. Die Linsen 22,24 sind somit um die Schwenkachsen 76 bzw. 78 in Richtung der Pfeile 80 bzw. 82 verschwenkbar.

Durch Verschwenken der Vergrößerungsmittel 66,68 nach innen, d.h. in Richtung des Aufnahmeteils 14, kann die Größe des Okulars zum Transport verringert werden. Bei nach innen geschwenkten Vergrößerungsmitteln 66,68 sind die Linsen 22,24 derart verschwenkt, dass sie im wesentlichen parallel zu dem Aufnahmeteil 14 verlaufen. Die Halteteile 16 können entsprechend der ersten Ausführungsform wiederum nach innen in Richtung des Aufnahmeteils 14 um die Gelenke 18 geschwenkt werden.

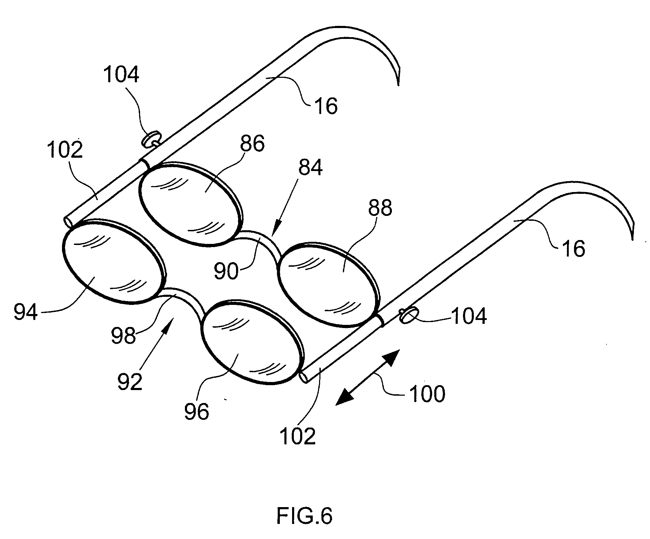

Die in Fig. 6 dargestellte Ausführungsform weist ein Gestell mit zwei Halteteilen 16 auf. Bei den Halteteilen 16 handelt es sich um herkömmliche Brillenbügel. Zwischen den beiden Halteteilen 16 ist ein erstes Linsenpaar 84 vorgesehen. Das Linsenpaar 84 weist zwei Linsen 86,88 auf, die jeweils vor einem Auge, d.h. in einem Strahlengang angeordnet sind. Die beiden Linsen 86,88 sind durch einen Steg 90 miteinander verbunden.

In Blickrichtung vor dem ersten Linsenpaar 84, d.h. in einem größeren Abstand zu den Augen ist ein zweites Linsenpaar 92 vorgesehen. Das zweite Linsenpaar 92 weist ebenfalls zwei Linsen 94,96 auf, die jeweils in einem Strahlengang angeordnet sind. Die Linse 94 ist somit vor der Linse 86 und die Linse 96 vor der Linse 88 angeordnet. Die beiden Linsen 94,96 des zweiten Linsenpaares sind ebenfalls über einen Steg 98 miteinander verbunden.

Zur variablen Einstellung des Abstands zwischen den beiden Linsenpaaren 84,92 in Richtung des Pfeils 100 ist das zweite Linsenpaar 92 mit Befestigungselementen 102 verbunden. Die beiden Befestigungselemente 102 sind außerhalb des Brillenpaares 92 mit diesem verbunden. Die Verbindung zwischen den Befestigungselementen 102 und den beiden Linsen 94,96 des zweiten Linsenpaars 92 erfolgt somit in möglichst großem Abstand zueinander.

In dem dargestellten Ausführungsbeispiel weisen die Befestigungselemente 102 einen runden Querschnitt auf. Ebenso weisen die Halteteilen 16 einen runden Querschnitt auf, in den die Befestigungselemente 102 einsteckbar sind. Die Befestigungselemente 102 sind somit einfach in Richtung des Pfeils 100 verschiebbar und gleichzeitig innerhalb der Halteteile geführt. Hierdurch ist das zweite Linsenpaar 92 sicher mit den Halteteilen 16 des Gestells verbunden, so dass die Lage des zweiten Linsenpaars 92 definiert ist und kein Wackeln zwischen den beiden Linsenpaaren auftritt. Hierzu kann zusätzlich eine Klemmschraube 104 an dem Halteteil des Gestells vorgesehen sein.

Von besonderer Bedeutung für die Verbindung des zweiten Linsenpaars 92 mit den Halteteilen 16 des Gestells ist eine möglichst lange Führung der Befestigungselemente an oder in den Halteteilen 16. Beispielsweise können die Befestigungselemente auch derart ausgebildet sein, dass sie die Halteteile 16 zumindest teilweise von außen oder oben umgreifen und hierdurch ein Verschieben realisiert ist.

Vorzugsweise sind die Halteelemente 102 lösbar mit dem zweiten Linsenpaar 92 verbunden, so dass die Befestigungselemente 102 an unterschiedliche Halteteile 16 anpassbar sind, in dem Linsenpaare 92 mit unterschiedlichen Befestigungselementen 102 versehen werden können.

## Patentansprüche

1. Okular, mit einer mindestens zwei Linsen (22,24) in einem Strahlengang aufweisenden Vergrößerungseinrichtung (10,12) und einem Gestell mit einem Halteteil (16) zur Halterung des Okulars am menschlichen Kopf und einem Aufnahmeteil (14) zur Aufnahme der Vergrößerungseinrichtung (10,12).

2. Okular nach Anspruch 1, **dadurch gekennzeichnet**, dass die Vergrößerungseinrichtung (10,12) durch ein steckbares Befestigungsmittel (40,60) am Aufnahmeteil (14) befestigt ist.

3. Okular nach Anspruch 2, **dadurch gekennzeichnet**, dass das Befestigungsmittel (40,60) lösbare Rastmittel aufweist.

4. Okular nach Anspruch 2 oder 3, **dadurch gekennzeichnet**, dass das Befestigungsmittel (40,60) mindestens einen elastischen Befestigungsarm (42,44;64) mit Rastnase (48) aufweist, wobei der Befestigungsarm (42,44;64) das Aufnahmeteil (14) zumindest teilweise umgreift.

5. Okular nach einem der Ansprüche 2-4, **dadurch gekennzeichnet**, dass das Befestigungsmittel (42,44;64) eine Gleitfläche (50) aufweist, so dass die Vergrößerungseinrichtung (10,12) am Aufnahmeteil (14) verschiebbar gehalten ist.

6. Okular nach einem der Ansprüche 1-5, **dadurch gekennzeichnet**, dass die Vergrößerungseinrichtung zwei Vergrößerungsmittel (10,12) aufweist, die jeweils vor einem Auge angeordnet sind.

7. Okular nach Anspruch 6, **dadurch gekennzeichnet**, dass jedes Vergrößerungsmittel (10,12) mindestens zwei Linsen (22,24) aufweist, deren Abstand zueinander einstellbar ist.

8. Okular nach Anspruch 6 oder 7, **dadurch gekennzeichnet**, dass mit dem Vergrößerungsmittel (10,12) zwei zur Linsenachse versetzt angeordnete Befestigungsmittel (64) verbunden sind.

9. Okular nach Anspruch 6 oder 7, **dadurch gekennzeichnet**, dass die Vergrößerungsmittel (66,68) an dem Aufnahmeteil (14) gelenkig befestigt sind.

10. Okular nach einem der Ansprüche 6-9, **dadurch gekennzeichnet**, dass die Vergrößerungsmittel zusätzlich durch einen lösbar mit dem Gestell verbundenen Versteifungssteg gehalten sind.

11. Okular mit mindestens zwei Linsen je Strahlengang, einem mit einem Halteteil (16) zur Halterung des Okulars am menschlichen Kopf verbundenen ersten Linsenpaar (84) mit jeweils einer Linse (86,88) je Strahlengang und einem zweiten Linsenpaar (92) mit jeweils einer Linse (94,96) je Strahlengang, wobei das zweite Linsenpaar (92) über außerhalb der Linsen (94,96) vorgesehene Befestigungselemente (102) mit den Halteteilen (16) lösbar verbunden ist.

12. Okular nach Anspruch 11, **dadurch gekennzeichnet**, dass die Befestigungselemente (102) derart ausgebildet sind, dass der Abstand zwischen den beiden Linsenpaaren (84,92) einstellbar ist.

13. Okular nach Anspruch 12, **dadurch gekennzeichnet**, dass die Befestigungselemente jeweils ein Halteteil (16) des Gestells zumindest teilweise umgreifen, so dass der Abstand der beiden Linsenpaare (84,92) durch Verschieben einstellbar ist.

14. Okular nach einem der Ansprüche 11-13, **dadurch gekennzeichnet**, dass an dem Gestell eine Antriebseinheit und eine Fokussiereinheit zum Fokussieren durch automatische Abstandsänderung der beiden Linsenpaare (84,92) vorgesehen ist.
